# EUROPÄISCHE PATENTSCHRIFT

(11) **EP 2 943 739 B1**
(45) Veröffentlichungstag und Bekanntmachung des Hinweises auf die Patenterteilung: **03.10.2018**
(21) Anmeldenummer: 14703251.0
(22) Anmeldetag: 13.01.2014
(51) Int. Cl.: F41H 5/26, F41H 5/013

(54) **SCHUTZVORRICHTUNG FÜR EINE OPTIK**
PROTECTIVE DEVICE FOR A LENS
DISPOSITIF DE PROTECTION D'UNE OPTIQUE

(30) Priorität: 14.01.2013 DE 102013100331
(43) Veröffentlichungstag der Anmeldung: 18.11.2015
(73) Patentinhaber: Krauss-Maffei Wegmann GmbH & Co. KG, 80997 München (DE)
(72) Erfinder: FEHR, Michael, 34127 Kassel (DE)
(74) Vertreter: Feder Walter Ebert
(86) Internationale Anmeldenummer: PCT/DE2014/100004
(87) Internationale Veröffentlichungsnummer: WO 2014/108128

(56) Entgegenhaltungen:
- FR-A1- 2 509 034
- US-A- 4 004 465
- US-A- 5 375 505

## Beschreibung

Die Erfindung betrifft eine Schutzvorrichtung für eine Optik mit einer eine Optikaufnahme gegen ballistische Einwirkungen schützende Schutzhaube, die eine Sichtöffnung für die Optik aufweist, und einer Verschlussklappe zum Verschließen der Sichtöffnung. Zudem betrifft sie eine optische Einrichtung mit einer Optik sowie ein Fahrzeug.

Schutzhauben zum Schutz von Optiken insbesondere für militärische Fahrzeuge sind in vielfältigen Ausführungen bekannt. In der Regel weisen diese eine oder mehrere türartige Schwenkklappen zum Verschließen der Sichtöffnung für die Optik auf, so wie dies beispielsweise in der DE 10 2008 039 512 A1 beschrieben ist. Zum Öffnen und Schließen werden diese Klappen über einen relativ großen Winkelbereich von einer die Sichtöffnung verschließenden Stellung in eine an der Außenseite der Schutzhaube anliegende Stellung verschwenkt. Da die Schutzhauben zumeist rechteckig ausgebildet sind und die Schwenkachse in einer Ecke angeordnet ist, beträgt der Schwenkwinkel häufig 270 Grad. Der Schwenkbereich ist damit sehr groß und es wird viel Platz neben der Schutzhaube zum Schwenken der Klappe benötigt. Da dieser Platz in der Regel nicht in allen Stellpositionen der optische Einrichtung zur Verfügung steht, muss die optische Einrichtung zum Öffnen und Schließen der Klappe in der Regel zunächst in eine definierte Azimutposition gedreht werden, bevor die Sichtöffnung verschlossen werden kann. Dies führt zu hohen Verschlusszeiten, so dass nachdem der Verschlussbefehl gegeben wurde noch verhältnismäßig viel Zeit vergeht bis die Verschlussklappe geschlossen ist. In dieser Zeit kann die zu schützende Optik z. B. durch ein ballistisches Projektil oder eine Laserblendeinrichtung beschädigt werden.

Die FR 2 509 034 A1 offenbart eine Schutzhaube für eine Optik mit einer rotierbaren Verschlussklappe, die ein zügigeres Verschließen der Sichtöffnung ermöglicht. Allerdings ist die Verschlussklappe an der Innenseite der Schutzhaube geführt und nicht abnehmbar.

Der Erfindung liegt daher die Aufgabe zugrunde, eine verbesserte Schutzvorrichtung auszugestalten.

Die Aufgabe wird durch eine Schutzvorrichtung mit den Merkmalen des Anspruchs 1 gelöst.

Durch die Anordnung der Drehachse der Verschlussklappe in der Art, dass sie durch die Optikaufnahme verläuft, ist ein sehr schnelles Verschließen der Sichtöffnung möglich. Der Drehwinkel der Verschlussklappe kann hierdurch erheblich reduziert werden, in der Regel auf 45 bis 120 Grad. Bevorzugt entspricht der Drehwinkel dem Öffnungswinkel der Sichtöffnung, wobei er auch bis zu 30%, insbesondere bis zu 10%, mehr oder weniger betragen kann. Bevorzugt ist die Drehachse fest zur Schutzhaube angeordnet.

Zudem ist ein Drehen der Verschlussklappe sehr dicht an der Schutzhaube möglich, so dass die Verschlussklappe sehr wenig Platz beim Verschließen der Sichtöffnung benötigt. Dadurch ist es möglich, dass der Bereich um die optische Einrichtung für andere Betriebsmittel zur Verfügung steht, da der Raum nicht für eine ausladende Schwenkbewegung der Verschlussklappe freigehalten werden muss. Tatsächlich kann hierdurch die Verschlussklappe sogar innerhalb der Rotationskontur der optischen Einrichtung geöffnet und geschlossen werden, bevorzugt sogar innerhalb der Rotationskontur der Schutzhaube.

Erfindungsgemäß ist die Verschlussklappe entlang der Außenseite der Schutzhaube geführt.

Besonders bevorzugt ist die Schutzklappe entlang einer Außenkontur der Schutzhaube drehbar. Hierdurch wird eine besonders kompakte und stabile Konstruktion erreicht, da sich die Schutzhaube bei der Einwirkung von äußeren Kräften, insbesondere im Fall von Beschuss, an der Schutzhaube abstützen kann.

Ferner kann die Verschlussklappe auf der Haube und/oder am Fuß der Haube gelagert sein. Besonders bevorzugt ist die Verschlussklappe auf der Haube mit einem Drehlager gelagert. Zusätzlich oder Alternativ kann die Verschlussklappe am Fuß der Schutzhaube in einer Schiene geführt. Hierdurch ergibt sich eine besonders stabile und verformungssteife Führung der Schutzhaube beim Öffnen und Schließen der Sichtöffnung.

Bevorzugt ist die Schutzhaube ein separates Bauteil, welches insbesondere lösbar an der Optik befestigbar ist und somit beispielsweise im Sinne einer Zusatzpanzerung den Schutz für die Optik erhöht. Die Schutzhaube kann aber auch Bestandteil der Optik sein und z.B. in das Gehäuse der Optik integriert sein oder vom Gehäuse der Optik gebildet werden. Die Schutzhaube, zusammen mit der Verschlussklappe, kann bevorzugt allseits einen Schutz bieten, dies ist aber nicht zwingend erforderlich. Sie bietet insbesondere einen Schutz zu den Seiten und/oder nach oben.

Eine Weiterbildung der Erfindung sieht vor, dass die Schutzhaube und die Verschlussklappe mit der Optik hinsichtlich einer rotatorischen Bewegung der Optik koppelbar sind. Durch eine Kopplung von Optik und Schutzhaube kann die Schutzhaube mit den Stellantrieben der Optik in Azimut gedreht werden, so dass das Sehfeld der optischen Einrichtung gemeinsam mit der Sichtöffnung in Azimut gerichtet wird.

Zum Verschließen der Sichtöffnung kann die Verschlussklappe in das Sehfeld der optischen Einrichtung bewegt werden. Besonders bevorzugt ist die Haube und die optische Einrichtung nicht nur koppelbar, sondern dauerhaft fest gekoppelt. Besonders bevorzugt ist auch die Verschlussklappe mit einer Azimutbewegung der optischen Einrichtung gekoppelt, wird jedoch zum Öffnen und Schließen oder während des Öffnens und Schließens der Verschlussklappe relativ zur optischen Einrichtung bewegt.

Insbesondere um Verlademaße einhalten zu können, ist die Verschlussklappe lösbar an der Schutzhaube angeordnet. Durch die lösbare Anordnung der Verschlussklappe kann diese vor dem Verladen des Fahrzeugs in oder auf ein Transportmittel abgenommen werden. Hierdurch kann die Höhe der Fahrzeugkontur reduziert werden, so dass die Verlademaße eingehalten werden. Ferner kann auch die Schutzhaube lösbar am Fahrzeug und/oder an der Optik angeordnet sein.

Es ist besonders vorteilhaft, wenn ein Lagerdeckel, die Verschlussklappe und/oder die Schutzhaube eine Justiereinrichtung zum Ausrichten der Verschlussklappe bei der Montage der Verschlussklappe an der Schutzhaube aufweisen. Besonders bevorzugt weist die Justiereinrichtung einen Zapfen zum Ausrichten auf. Hierdurch wird die Montage vereinfacht und beschleunigt, da vor allem ein aufwendiges Justieren nicht notwendig ist.

Gemäß einer weiteren Ausgestaltung der Erfindung weist die Schutzvorrichtung einen Antrieb zum Drehen der Verschlussklappe auf. Hierdurch wird ein besonders einfaches Öffnen und Schließen der Verschlussklappe ermöglicht. Zudem kann in diesem Fall die Verschlussklappe auch automatisch geöffnet und geschlossen werden. Beispielsweise dann, wenn ein anfliegendes Projektil oder ein Laser, insbesondere Blendlaser, detektiert wurde.

Bevorzugt wird die Verschlussklappe am Umfang, insbesondere im unteren Bereich, angetrieben. Hierzu kann die Verschlussklappe ein entlang des Umfangs verlaufendes Antriebselement wie eine Zahnstange aufweisen.

Der Motor kann haubenfest oder verschlussklappenfest angeordnet sein. Bevorzugt ist der Antrieb elektrisch, pneumatisch oder hydraulisch. Der Antrieb kann eine Rutschkupplung aufweisen. Eine Rutschkupplung schützt zum einen den Motor vor Überlastung wenn die Verschlussklappe z. B. infolge eines Geschoßtreffers verklemmt ist und erleichtert zum anderen ein manuelles Öffnen und Schließen der Verschlussklappe.

Zudem kann die Schutzvorrichtung mindestens einen Anschlag für die Verschlussklappe in einer Offenstellung und/oder in einer Schließstellung aufweisen. Bevorzugt weist sie einen Anschlag für die Offenstellung und einen Anschlag für die Schließstellung auf. Diese können die jeweilige Endstellung der Verschlussklappe festlegen. Auch kann die Schutzvorrichtung mindestens einen Endschalter zur Erfassung einer Offenstellung und/oder einer Schließstellung der Verschlussklappe aufweisen. Besonders bevorzugt verfügt die Schutzvorrichtung über je einen Endschalter zur Erfassung der Offen- und der Schließstellung.

Ferner hat es sich als vorteilhaft erwiesen, wenn die Schutzvorrichtung eine Endlagenfixiereinrichtung für die Verschlussklappe in einer Offenstellung und/oder einer Schließstellung aufweist. Durch eine Fixierung in einer Endlage bekommt die Verschlussklappe einen zusätzlichen Halt. Dadurch schwingt die Klappe in ihren Endlagen weniger.

Bevorzugt ist die Öffnungsweite der Sichtöffnung kleiner als 120 Grad, bevorzugt kleiner als 100 Grad, besonders bevorzugt kleiner 80 Grad. Vorteilhafterweise ist beträgt die Öffnungsweite der Sichtöffnung mindestens 45 Grad, weiter bevorzugt mindestens 70 Grad. Die Verschlussklappe kann eine gebogene Platte mit insbesondere teilkreisförmigen Querschnitt aufweisen. Die Platte ist somit bevorzugt als Zylindermantelsegment ausgebildet. Besonders bevorzugt bildet die Platte einen die Sichtöffnung verschließende Teil der Verschlussklappe. Zudem kann die Verschlussklappe einen Schenkel aufweisen, an welchem sie mit der Schutzhaube gelagert ist. Bevorzugt entspricht die Länge des Schenkels im Wesentlichen dem Radius der gebogenen Platte bzw. des Zylindermantelsegments. Auch ist es vorteilhaft, wenn der Radius der gebogenen Platte dem Abstand der Platte zur Drehachse der Verschlussklappe im Wesentlichen entspricht.

Darüber hinaus wird zur **Lösung** der vorstehenden Aufgabe bei einer optischen Einrichtung der eingangs genannten Art vorgeschlagen, dass diese eine Schutzvorrichtung der zuvor beschriebenen Art aufweist.

Die optische Einrichtung kann einen Winkelspiegel oder ein Periskop als Optik aufweisen.

Die Drehachse der Verschlussklappe kann durch die optische Einrichtung, insbesondere durch den Winkelspiegel, verlaufen. Bevorzugt verläuft die Drehachse im Wesentlichen vertikal. Die Azimut-Drehachse der optischen Einrichtung und die Drehachse können im Wesentlichen parallel verlaufen. Bevorzugt liegen diese beiden Drehachsen nicht weiter als 25 cm, besonders bevorzugt nicht weiter als 10 cm auseinander. Besonders vorteilhaft ist es, wenn beide Drehachsen im Wesentlichen koaxial verlaufen. Alternativ kann die Drehachse der Verschlussklappe jedoch auch im Wesentlichen horizontal verlaufen. In diesem Fall dreht sich die Verschlussklappe zum Öffnen oder Schließen der Sichtöffnung nach oben oder unten.

Des Weiteren wird die eingangs beschriebene Aufgabe bei einem eingangs beschriebenen Fahrzeug durch die zuvor beschriebene Schutzvorrichtung und/oder die zuvor beschriebene optische Einrichtung **gelöst**.

Es ergeben sich die zuvor beschriebenen Vorteile. Besonders bevorzugt ist die Schutzvorrichtung auf dem Fahrzeug oder einem Turmdach des Fahrzeugs angeordnet. Die optische Einrichtung kann auf dem Fahrzeugdach oder dem Turmdach angeordnet sein und ins Fahrzeuginnere hineinragen.

Die Erfindung wird nachfolgend anhand einiger lediglich bevorzugter Ausführungsbeispiele darstellende Zeichnungen näher erläutert. In den Zeichnungen zeigen
- Fig. 1: eine dreidimensionale Ansicht einer optischen Einrichtung mit Schutzvorrichtung und aufgenommener Optik,
- Fig. 2: die optische Einrichtung aus Fig. 1 mit einem Dreibein und einer weiteren Einrichtung,
- Fig. 3: die optische Einrichtung mit geschlossener Verschlussklappe und dem Dreibein mit einer weiteren Einrichtung,
- Fig. 4: eine perspektivische Ansicht der Schutzvorrichtung mit geöffneter Verschlussklappe,
- Fig. 5: eine andere perspektivische Ansicht der Schutzvorrichtung aus Fig. 4,
- Fig. 6: eine perspektivische Ansicht der Schutzvorrichtung mit geschlossener Verschlussklappe,
- Fig. 7: eine andere Ansicht der Schutzvorrichtung aus Fig. 6,
- Fig. 8: eine andere Ansicht der Schutzvorrichtung aus Fig. 6,
- Fig. 9: eine Draufsicht auf die Schutzvorrichtung aus Fig. 6,
- Fig. 10: eine Schnittansicht der Schutzvorrichtung gemäß der Verbindungslinie A-A aus Fig. 9,
- Fig. 11: eine Schutzvorrichtung mit demontierter Verschlussklappe,
- Fig. 12: eine weitere Ansicht einer Schutzvorrichtung mit demontierter Verschlussklappe,
- Fig. 13: eine Ansicht des Antriebs der Verschlussklappe und
- Fig. 14: eine weitere Ansicht des Antriebs der Verschlussklappe.

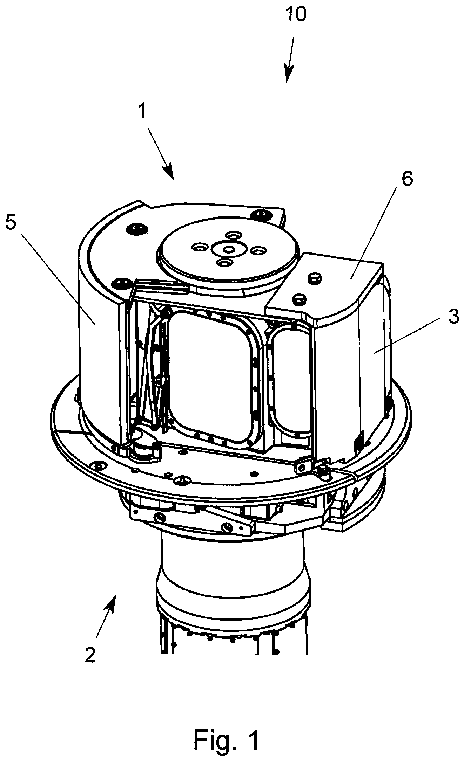

Die Fig. 1 zeigt eine Schutzvorrichtung 1 mit einer Optik 2, welche gemeinsam eine optische Einrichtung 10 bilden. Die optische Einrichtung 10 kann einen oder mehrere Winkelspiegel, Periskope, Kameras, Nachtsichtgeräte, Entfernungsmesser und weitere Optiken enthalten. Sie dient dem Ausblick aus einem militärischen Fahrzeug zur Beobachtung der Umgebung. Die optische Einrichtung 10 kann durch das Fahrzeugdach geführt oder auf dem Fahrzeugdach angeordnet sein. Die optische Einrichtung 10 ist drehbar am Fahrzeug angeordnet.

Die Schutzvorrichtung 1 ist zum Schutz, insbesondere gegen ballistische Bedrohungen, über der Optik 2 angeordnet. Die Schutzvorrichtung 1 nimmt somit einen Teil der Optik 2 im Inneren der Schutzhaube 3 auf. Die Optikaufnahme 41 wird insofern von dem Inneren der Schutzhaube gebildet, insbesondere von dem Teil des Inneren, in dem die Optik 2 angeordnet ist. Im Ausführungsbeispiel stellt die Schutzhaube 3 ein separates Teil zur Optik 2 dar. Alternativ kann die Schutzhaube 3 auch ein Teil des Gehäuses der Optik 2 sein.

Die Schutzvorrichtung 1 ist gepanzert. Die ballistischen Schutzelemente der Schutzvorrichtung 1, insbesondere die Verschlussklappe 5, bestehen aus einem Panzermaterial, insbesondere Metall wie Stahl. Die Verschlussklappe 5 kann zum Verschließen der Sichtöffnung 4 der Optik 2 vor die Sichtöffnung gedreht werden, so dass ein Schutz des Sichtfensters der Optik 2 erreicht wird.

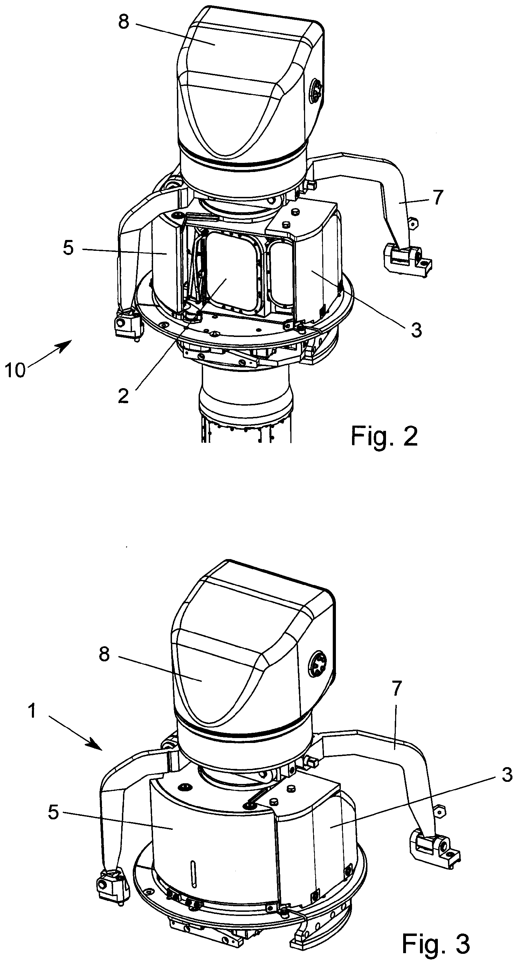

Zusätzlich ist, wie in den Fig. 2 und 3 gezeigt, über der Schutzvorrichtung 1 eine weitere Einrichtung 8 angeordnet. Bevorzugt steht die weitere Einrichtung 8 auf einem Dreibein 7. Sie kann insbesondere ein Radarstörgerät oder eine andere elektronische und/oder optische Vorrichtung sein.

Ohne die erfindungsgemäße Ausgestaltung der Schutzvorrichtung 1 würden die Beine des Dreibeins 7 in vielen Azimut-Stellungen der Optik eine beim Drehen ausladende Verschlussklappe behindern, so dass die optische Einrichtung 10 jeweils in eine bestimmte Azimut-Stellung zwischen zwei Beinen gedreht werden müsste, um die Klappe zu schließen. Da bei der erfindungsgemäßen Schutzvorrichtung 1 die Drehachse D durch die Optikaufnahme 41 verläuft, kann die Verschlussklappe 5 beim Öffnen und Schließen jetzt eng an der Schutzhaube 3 entlang geführt werden. Sie läuft beim Drehen eng an einer seitlichen Kante 9 der Sichtöffnung 4 entlang. Entsprechend kann die Verschlussklappe 5 in jeder Azimut-Stellung geöffnet und geschlossen werden. Im Ausführungsbeispiel ist die Drehachse D fest zur Schutzhaube 3 angeordnet. Die Drehachse D bewegt sich beim Öffnen und Schließen der Verschlussklappe 5 nicht relativ zur Schutzhaube 3.

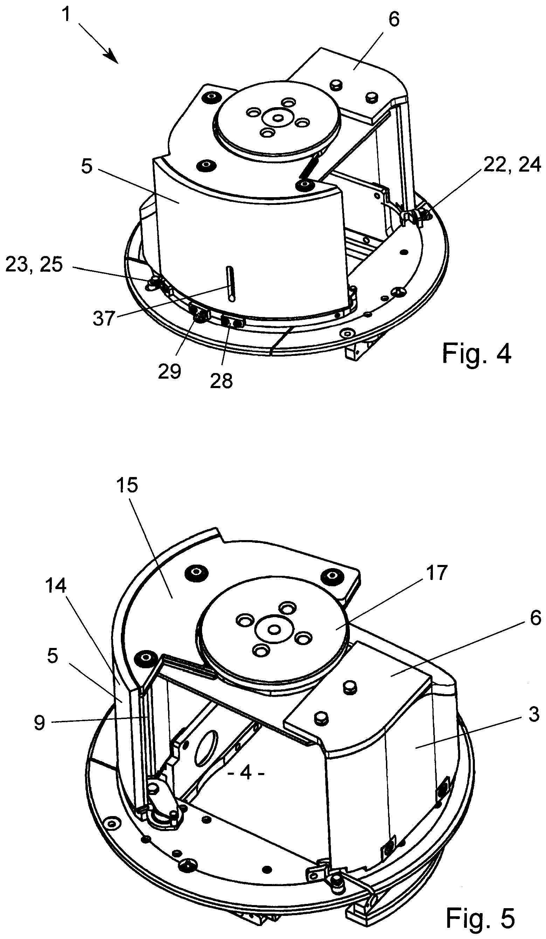

In den Fig. 4 und 5 ist die Schutzvorrichtung 1 mit geöffneter Verschlussklappe 5 gezeigt. In der geöffneten Stellung ist die Verschlussklappe 5 an der Seite der Schutzhaube 3 angeordnet. Die Verschlussklappe 5 weist eine gebogene Platte als Zylindermantelsegment 14 und einen Schenkel 15 auf. Die Lagerung der Verschlussklappe erfolgt auf der Schutzhaube 3. Zur Verstärkung der Schutzhaube 3 ist auf der Haube 3 zusätzlich eine Platte 6 angeordnet. Die Platte 6 bedeckt im Wesentlichen die Fläche auf der Oberseite der Schutzhaube 1, welche nicht von der Verschlussklappe 5 bedeckt wird. Zum Verschließen der Sichtöffnung wird die Verschlussklappe 5 entlang der Kante 9 vor die Sichtöffnung 4 gedreht. Dabei läuft die Verschlussklappe 5 um die Schutzhaube 3.

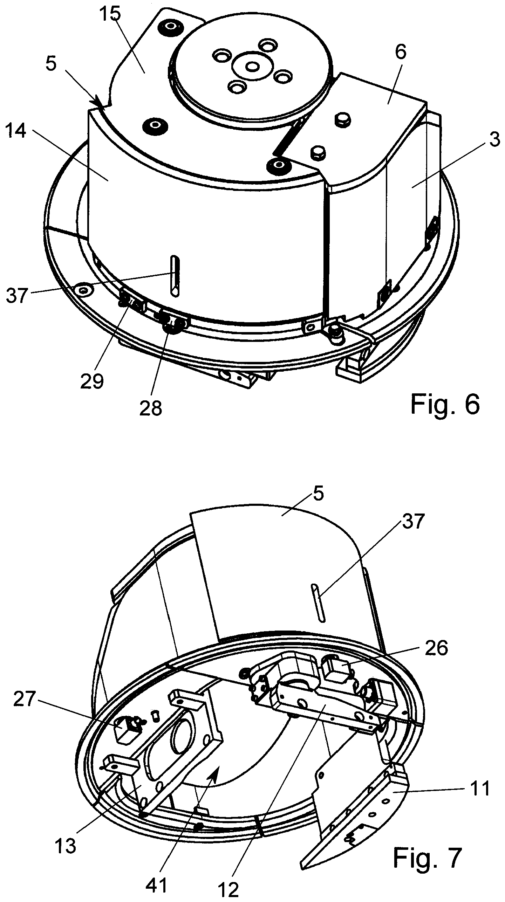

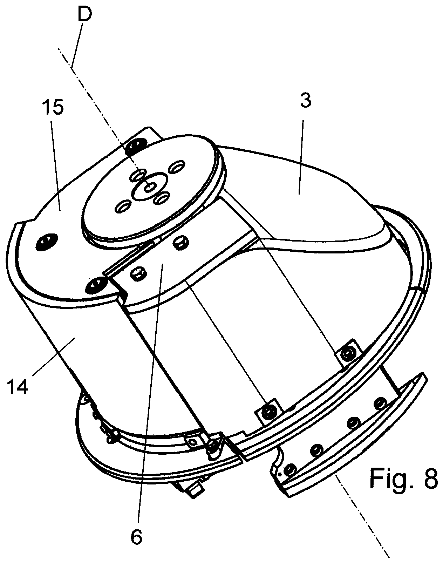

In den Fig. 6 bis 8 ist die Schutzvorrichtung 1 mit geschlossener Verschlussklappe 5 gezeigt. Wie in den Fig. 6 und 7 zu erkennen ist, weist die gebogene Platte 14 der Verschlussklappe 5 einen Schlitz 37 auf. Durch diesen Schlitz 35 kann auch bei geschlossener Verschlussklappe 5 mit der Optik 2 nach außen gesehen werden.

Zudem weist die Verschlussklappe 2 Justierstücke 28, 29 für die Endschalter 26, 27 auf, mit welchen der Antrieb 30 bei Erreichen der Offen- bzw. Schließstellung abgeschaltet wird. Der Endschalter 26 wird bei Erreichen der Schließstellung durch das Justierstück 28 ausgelöst und der Endschalter 27 bei Erreichen der Offenstellung durch das Justierstück 29.

Befestigt wird die Schutzhaube über die Verbindungselemente 11, 12, und 13 an der Optik 2.

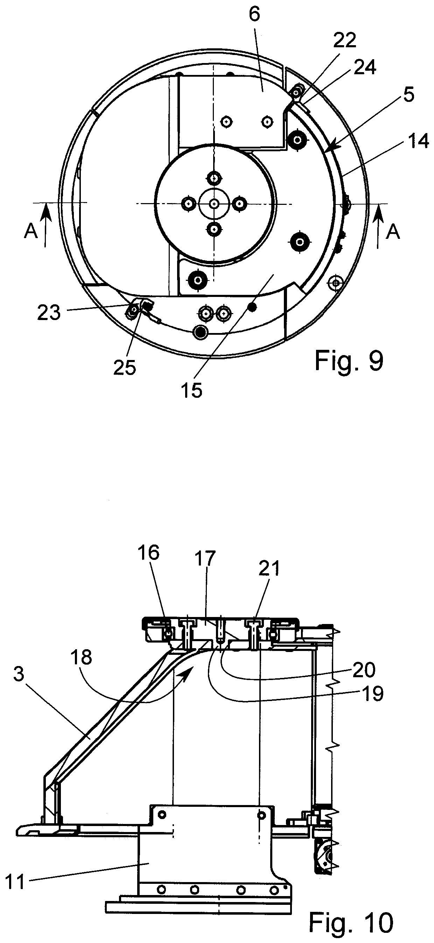

In Fig. 9 ist die Schutzvorrichtung 1 von oben in geschlossenem Zustand gezeigt. Wie diese Ansicht zeigt, bewegt sich die Verschlussklappe 5 beim Öffnen und Schließen in der Rotationskontur der Schutzvorrichtung 1, im Ausführungsbeispiel sogar innerhalb der Rotationskontur der Schutzhaube 3.

In dieser Ansicht sind auch die Anschläge 22, 23 sowie die Endlagenfixierungen 24, 25 gut zu erkennen. Die Anschläge 22, 23 weisen eine Schwalbenschwanzführung auf. Hierdurch kann die Verschlussklappe durch diese zusätzlich geführt werden. Der Anschlag 22 und die Endlagenfixierung 24 sind einteilig ausgebildet und dienen als Anschlag bzw. Endlagenfixierung für die Verschlussklappe 5 in der Schließstellung. Der Anschlag 23 und die Endlagenfixierung 25 sind ebenfalls einteilig ausgebildet und dienen als Anschlag bzw. Endlagenfixierung für die Verschlussklappe 5 in der Offenstellung.

Zum Öffnen und Schließen der Verschlussklappe 5 dreht die Verschlussklappe 5 im Ausführungsbeispiel um 80 Grad zwischen diesen beiden Anschlägen 22, 23.

In der Fig. 10 ist die Schutzvorrichtung 1 in einer Schnittstellung gemäß der Linie A-A aus Fig. 9 dargestellt. In dieser Ansicht ist die obere Lagerung der Verschlussklappe 5 auf der Schutzhaube 1 gezeigt. Die Verschlussklappe 5 wird über einen Lagerdeckel 17 und das Kugellager 18 drehbar mit der Schutzhaube 3 verbunden. Durch diese Konstruktion kann die Verschlussklappe 5 zur Verringerung der Bauhöhe einfach von der Schutzhaube 3 abgenommen werden. Dafür müssen lediglich die vier Verbindungselemente 21 gelöst und gemeinsam mit dem Lagerdeckel 17 und der Verschlussklappe 5 von der Schutzhaube 3 genommen werden.

Um eine möglichst einfache und schnelle Montage der Verschlussklappe 5 wieder zu ermöglichen, weist der Lagerdeckel 17 einen Zapfen 19 auf. Über diesen und die korrespondierende Aussparung 20 in der Schutzhaube 3 wird die Position der Verschlussklappe 5 zur Schutzhaube 3 festgelegt. Der Zapfen 19 und die Aussparung 20 bilden insoweit eine die Montage vereinfachende Justiereinrichtung 18.

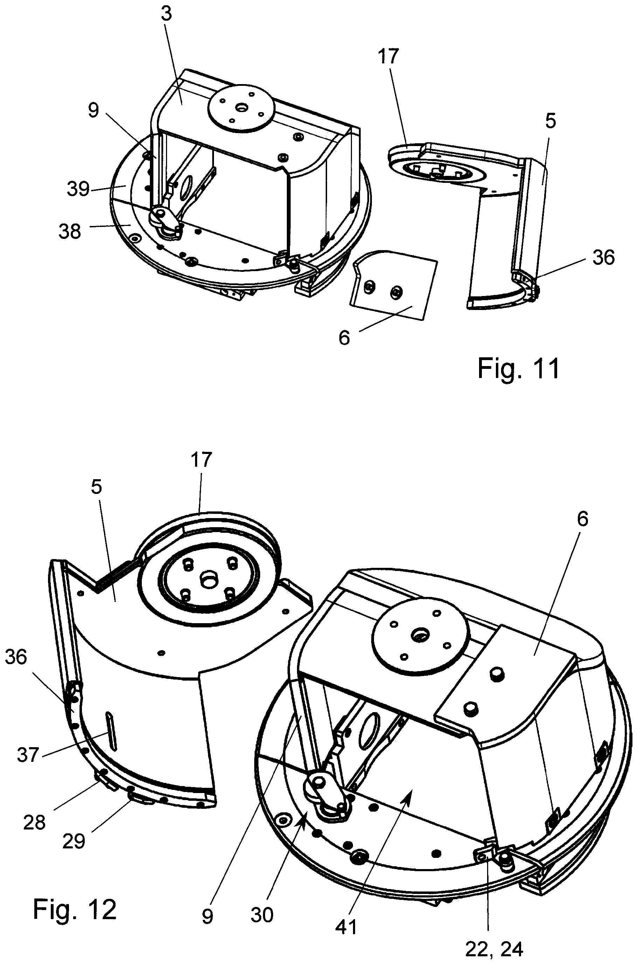

In den Fig. 11 und 12 ist die Schutzhaube 3 mit abgenommener Verschlussklappe 5 gezeigt. Durch das Abnehmen der Verschlusshaube 5 mit dem Lagerdeckel 17 und der Aufsatzplatte 6 kann die Höhe der Schutzvorrichtung 1 reduziert werden, so dass die maximalen Verlademaße eines Fahrzeugs mit auf dem Dach montierter Schutzvorrichtung 1 eingehalten werden.

Die Verschlussklappe 5 weist ein Zahnsegment 36 auf, über das sie von dem Antrieb 30 angetrieben wird. Das Zahnsegment 36 ist am Zylindermantelsegment 14 im Fußbereich der Verschlussklappe 5 angeordnet. Auf der Außenseite dieses Zahnsegments 36 sind die Justierstücke 28, 29 für die Endschalter 26, 27 montiert. Zur Verstellung der Justierstücke 28, 29 weisen diese Langlöcher auf. Hierdurch können die Schaltpunkte über die Justierstücke 28, 29 eingestellt werden und müssen nicht durch versetzen der Endschalter 26, 27 verstellt werden.

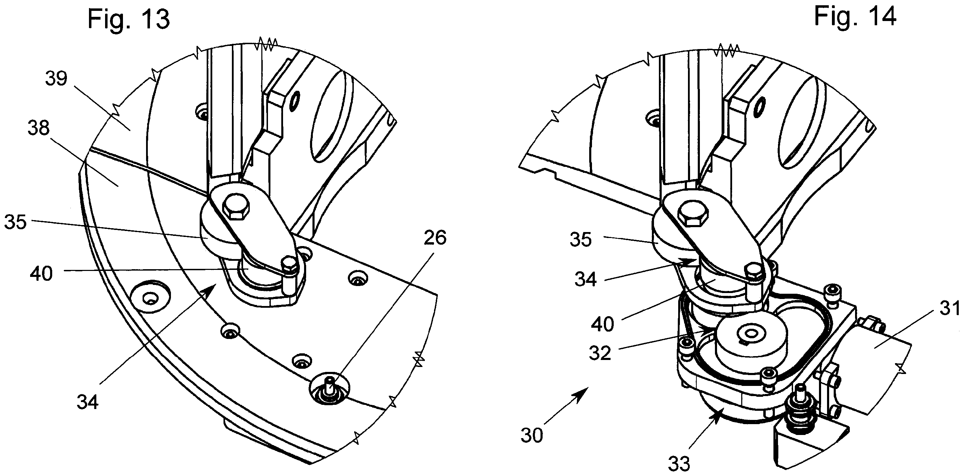

Nachfolgend soll anhand der Fig. 13 und 14 der Antrieb 30 für die Verschlussklappe beschrieben werden. Der Antrieb 30 umfasst einen Motor 31, welcher im Ausführungsbeispiel als Elektromotor ausgebildet ist. Alternativ kann jedoch auch ein pneumatischer oder hydraulischer Motor verwendet werden. Um ein erleichtertes Notöffnen und Notschließen der Verschlussklappe 5 zu ermöglichen, weist der Antrieb 30 eine nicht gezeigte Rutschkupplung auf.

Der Kraftverlauf vom Motor 31 zu der Verschlussklappe 5 ist besonders gut der Fig. 14 zu entnehmen. An dem Motor 31 ist ein Schneckengetriebe 33 angeordnet. Das Schneckengetriebe 33 wiederum ist über eine nicht gezeigte Rutschkupplung mit einem Stirnradgetriebe 32, 34 verbunden. Alternativ kann die Rutschkupplung zwischen dem Motor 31 und dem Schneckengetriebe 33 angeordnet sein. Dann ist dem Schneckengetriebe ein Stirnradgetriebe 32, 34 nachgeschaltet. Die Rutschkupplung kann im Schneckengetriebe integriert sein. Das Stirnradgetriebe 32, 34 wiederum überträgt das Antriebsmoment des Motors auf das Zahnsegment 36 der Verschlussklappe. Anstelle eines Stirnradgetriebes können auch, wie im Ausführungsbeispiel gezeigt, zwei Stirnradgetriebe 32, 34 das Motormoment auf die Verschlussklappe übertragen. Diese können auch als ein zweistufiges Stirnradgetriebe ausgebildet sein. Das Stirnradgetriebe 34 weise ein Antriebsritzel 40 und ein Abtriebsritzel 35 auf. Das Abtriebsritzel 35 treibt über die Zahnsegmente 36 der Verschlussklappe 5 dieselbe an.

Das Stirnradgetriebe 34 kann zum Toleranzausgleich zwischen Antrieb 30 und Verschlussklappe 5 schwenkbeweglich ausgebildet sein, insbesondere um die Drehachse des Antriebsritzels 40.

Ferner weist die Schutzvorrichtung 1 einen Montagering 38, 39 auf. Im Ausführungsbeispiel ist der Montagering 38, 39 zweiteilig ausgebildet. Auf dem Montagering 38, 39 ist die Schutzhaube 3 angeordnet. Der Montagering 38, 39 dient als Verbindungsflansch für die Schutzvorrichtung 1 und die Optik 2 zum Fahrzeug. Der Montagering 38, 39 wird auch einen auf dem Fahrzeugdach oder Fahrzeugturm angeordneten Drehlager befestigt, so dass sich die Schutzvorrichtung 1 und die gesamte optische Einrichtung 10 in Azimut zum Turm bzw. zum Fahrzeug drehen können.

Bevorzugt sind die Endschalter 26, 27 geschützt in der Art unter dem Montagering 38, 39 angeordnet, dass nur ihre Taster nach fahrzeugaußen reichen. Auch der Antrieb 30 ist größtenteils unter dem Montagering 38, 39 angeordnet. Wie die Fig. 13 zeigt, sind der Motor 31, das Schneckengetriebe 33 und die nicht gezeigte Rutschkupplung sowie das Stirnradgetriebe 32 geschützt unter dem Montagering 38, 39 angeordnet und lediglich das Stirnradgetriebe 34 oberhalb desselben angeordnet.

Durch die erfindungsgemäße Schutzvorrichtung 1 und die erfindungsgemäße optische Einrichtung 10 wird mit der Schutzhaube 3 und der Verschlussklappe 5 ein Schutz für die Optik 2 bereitgestellt, welche innerhalb der Rotationskontur der optischen Einrichtung 10 geöffnet und geschlossen werden kann. Zudem werden die notwendigen Kräfte zum Öffnen und Schließen der Verschlussklappe 5 erheblich reduziert und die Trägheit der Verschlussklappe 5 verringert. Auch hierdurch wird ein deutlich zügigeres Öffnen und Schließen der Verschlussklappe 5 ermöglicht und der Schutz der Optik 2 weiter verbessert.

### Bezugszeichen:

- 1: Schutzvorrichtung
- 2: Optik
- 3: Schutzhaube
- 4: Sichtöffnung
- 5: Verschlussklappe
- 6: Aufsatzplatte
- 7: Dreibein
- 8: weitere Einrichtung
- 9: Kante der Sichtöffnung
- 10: Optische Einrichtung
- 11: Verbindungselement
- 12: Verbindungselement
- 13: Verbindungselement
- 14: gebogene Platte
- 15: Schenkel
- 16: Kugellager
- 17: Lagerdeckel
- 18: Justiereinrichtung
- 19: Zapfen
- 20: Aussparung
- 21: Verbindungselement
- 22: Anschlag (Schließstellung)
- 23: Anschlag (Offenstellung)
- 24: Endlagenfixiereinrichtung (Schließstellung)
- 25: Endlagenfixiereinrichtung (Offenstellung)
- 26: Endschalter (Schließstellung)
- 27: Endschalter (Offenstellung)
- 28: Justierstück für Endschalter (Schließstellung)
- 29: Justierstück für Endschalter (Offenstellung)
- 30: Antrieb
- 31: Motor
- 32: Stirnradgetriebe
- 33: Schneckengetriebe
- 34: Stirnradgetriebe
- 35: Abtriebsritzel
- 36: Zahnsegmet
- 37: Schlitz
- 38: Montagering
- 39: Montagering
- 40: Antriebsritzels
- 41: Optikaufname

- D: Drehachse

## Patentansprüche

1. Schutzvorrichtung für eine Optik (2) mit einer eine Optikaufnahme gegen ballistische Einwirkungen schützenden Schutzhaube (3), die eine Sichtöffnung (4) für die Optik (2) aufweist, und einer Verschlussklappe (5) zum Verschließen der Sichtöffnung (4), wobei die Verschlussklappe (5) gegenüber der Schutzhaube (3) drehbar ist und wobei die Drehachse (D) der Verschlussklappe (5) durch die Optikaufnahme (41) verläuft,
**dadurch gekennzeichnet,**
**dass** die Verschlussklappe (5) entlang der Außenseite der Schutzhaube (3) geführt ist und zur Verringerung der Bauhöhe von der Schutzhaube (3) abnehmbar ist.

2. Schutzvorrichtung nach Anspruch 1 **dadurch gekennzeichnet, dass** die Verschlussklappe (5) entlang einer Außenkontur der Schutzhaube (3) drehbar ist.

3. Schutzvorrichtung nach einem der vorhergehenden Ansprüche, **dadurch gekennzeichnet, dass** die Verschlussklappe (5) auf der Schutzhaube (3) und/oder am Fuß der Schutzhaube (3) gelagert ist.

4. Schutzvorrichtung nach einem der vorhergehenden Ansprüche, **dadurch gekennzeichnet, dass** die Schutzhaube und die Verschlussklappe (5) mit der Optik (2) hinsichtlich einer rotatorischen Bewegung der Optik (2) koppelbar sind.

5. Schutzvorrichtung nach einem der vorhergehenden Ansprüche, **dadurch gekennzeichnet, dass** die Verschlussklappe (5) lösbar an der Schutzhaube (3) angeordnet ist.

6. Schutzvorrichtung nach einem der vorhergehenden Ansprüche, **dadurch gekennzeichnet, dass** ein Lagerdeckel (17), die Verschlussklappe (5) und/oder die Schutzhaube (3) eine Justiereinrichtung (18), insbesondere einen Zapfen (19), zum Ausrichten der Verschlussklappe (5) bei der Montage der Verschlussklappe (5) an der Schutzhaube (3) aufweisen.

7. Schutzvorrichtung nach einem der vorhergehenden Ansprüche, **gekennzeichnet durch** einen Antrieb (30) zum Drehen der Verschlussklappe (5).

8. Schutzvorrichtung nach einem der vorhergehenden Ansprüche, **gekennzeichnet durch** mindestens einen Endschalter (26, 27) zur Erfassung einer Offenstellung und/oder einer Schließstellung der Verschlussklappe (5).

9. Schutzvorrichtung nach einem der vorhergehenden Ansprüche, **gekennzeichnet durch** eine Endlagenfixiereinrichtung (24, 25) für die Verschlussklappe (5) in einer Offenstellung und/oder einer Schließstellung.

10. Schutzvorrichtung nach einem der vorhergehenden Ansprüche, **dadurch gekennzeichnet, dass** die Öffnungsweite der Sichtöffnung (4) kleiner als 120°, insbesondere kleiner als 100°, ist.

11. Schutzvorrichtung nach einem der vorhergehenden Ansprüche , **dadurch gekennzeichnet, dass** die Verschlussklappe (5) eine gebogene Platte (14) aufweist.

12. Optische Einrichtung mit einer Optik, **gekennzeichnet durch** eine Schutzvorrichtung (1) nach einem der vorhergehenden Ansprüche.

13. Optische Einrichtung nach Anspruch 12, **dadurch gekennzeichnet, dass** die optische Einrichtung (10) einen Winkelspiegel oder ein Periskop aufweist.

14. Fahrzeug, **gekennzeichnet durch** eine Schutzvorrichtung (1) nach einem der Ansprüche 1 bis 11 und/oder eine optische Einrichtung (10) nach Anspruch 12 oder 13.

## Claims

1. Protective device for a lens (2) with a protective hood (3) protecting a lens mount against ballistic effects, having a sight opening (4) for the lens (2), and a closing flap (5) for closing the sight opening (4), wherein the closing flap (5) can rotate relative to the protective hood (3), and the axis of rotation (D) of the closing flap (5) runs through the lens mount (41),
**characterized in that** the closing flap (5) is led along the outside of the protective hood (3) and can be removed from the protective hood (3) to decrease the design height.

2. Protective device according to Claim 1, **characterized in that** the closing flap (5) can rotate along an outer contour of the protective hood (3).

3. Protective device according to one of the preceding claims, **characterized in that** the closing flap (5) can be mounted on the protective hood (3) and/or at the base of the protective hood (3).

4. Protective device according to one of the preceding claims, **characterized in that** the protective hood and the closing flap (5) are able to be coupled to the lens (2) in terms of a rotary movement of the lens (2).

5. Protective device according to one of the preceding claims, **characterized in that** the closing flap (5) is arranged removably on the protective hood (3).

6. Protective device according to one of the preceding claims, **characterized in that** a bearing cover (17), the closing flap (5) and/or the protective hood (3) have an adjusting device (18), especially a pin (19), for orienting the closing flap (5) when installing the closing flap (5) on the protective hood (3).

7. Protective device according to one of the preceding claims, **characterized by** a drive unit (30) for rotating the closing flap (5).

8. Protective device according to one of the preceding claims, **characterized by** at least one end switch (26, 27) to detect an open position and/or a closed position of the closing flap (5).

9. Protective device according to one of the preceding claims, **characterized by** an end position fixation device (24, 25) for the closing flap (5) in an open position and/or a closed position.

10. Protective device according to one of the preceding claims, **characterized in that** the aperture of the sight opening (4) is less than 120 degrees, preferably less than 100 degrees.

11. Protective device according to one of the preceding claims, **characterized in that** the closing flap (5) has a curved plate (14).

12. Optical device with a lens, **characterized by** a protective device (1) according to one of the preceding claims.

13. Optical device according to Claim 12, **characterized in that** the optical device (10) has an angled mirror or a periscope.

14. Vehicle, **characterized by** a protective device (1) according to one of Claims 1 to 11 and/or an optical device (10) according to Claim 12 or 13.

## Revendications

1. Dispositif de protection pour une optique (2), comprenant un capot de protection (3) protégeant un logement d'optique contre des actions balistiques, qui présente une ouverture de visée (4) pour l'optique (2), et un clapet de fermeture (5) pour fermer l'ouverture de visée (4), le clapet de fermeture (5) pouvant tourner par rapport au capot de protection (3) et l'axe de rotation (D) du clapet de fermeture (5) s'étendant à travers le logement d'optique (41),
**caractérisé en ce que**
le clapet de fermeture (5) est guidé le long du côté extérieur du capot de protection (3) et peut être enlevé pour réduire la hauteur de construction du capot de protection (3).

2. Dispositif de protection selon la revendication 1, **caractérisé en ce que** le clapet de fermeture (5) peut tourner le long d'un contour extérieur du capot de protection (3).

3. Dispositif de protection selon l'une quelconque des revendications précédentes, **caractérisé en ce que** le clapet de fermeture (5) est supporté sur le capot de protection (3) et/ou au niveau de la base du capot de protection (3).

4. Dispositif de protection selon l'une quelconque des revendications précédentes, **caractérisé en ce que** le capot de protection et le clapet de fermeture (5) peuvent être accouplés à l'optique (2) en vue d'un mouvement de rotation de l'optique (2).

5. Dispositif de protection selon l'une quelconque des revendications précédentes, **caractérisé en ce que** le clapet de fermeture (5) est disposé de manière amovible sur le capot de protection (3).

6. Dispositif de protection selon l'une quelconque des revendications précédentes, **caractérisé en ce qu'**un couvercle de support (17), le clapet de fermeture (5) et/ou le capot de protection (3) présentent un dispositif d'ajustement (18), en particulier un tourillon (19) pour orienter le clapet de fermeture (5) lors du montage du clapet de fermeture (5) sur le capot de protection (3).

7. Dispositif de protection selon l'une quelconque des revendications précédentes, **caractérisé par** un entraînement (30) pour faire tourner le clapet de fermeture (5).

8. Dispositif de protection selon l'une quelconque des revendications précédentes, **caractérisé par** au moins un commutateur de fin de course (26, 27) pour détecter une position ouverte et/ou une position fermée du clapet de fermeture (5).

9. Dispositif de protection selon l'une quelconque des revendications précédentes, **caractérisé par** un dispositif de fixation de position de fin de course (24, 25) pour le clapet de fermeture (5) dans une position d'ouverture et/ou une position de fermeture.

10. Dispositif de protection selon l'une quelconque des revendications précédentes, **caractérisé en ce que** la largeur d'ouverture de l'ouverture de visée (4) est inférieure à 120°, en particulier inférieure à 100°.

11. Dispositif de protection selon l'une quelconque des revendications précédentes, **caractérisé en ce que** le clapet de fermeture (5) présente une plaque cintrée (14).

12. Dispositif optique comprenant une optique, **caractérisé par** un dispositif de protection (1) selon l'une quelconque des revendications précédentes.

13. Dispositif optique selon la revendication 12, **caractérisé en ce que** le dispositif optique (10) présente un miroir en angle ou un périscope.

14. Véhicule, **caractérisé par** un dispositif de protection (1) selon l'une quelconque des revendications 1 à 11 et/ou un dispositif optique (10) selon la revendication 12 ou 13.
